# EUROPÄISCHE PATENTSCHRIFT

(11) **EP 0 479 329 B1**
(45) Veröffentlichungstag und Bekanntmachung des Hinweises auf die Patenterteilung: **04.12.1996**
(21) Anmeldenummer: 91118194.9
(22) Anmeldetag: 30.08.1990
(51) Int. Cl.: A01F 12/40, A01F 29/02

(54) **Häcksler**
Chopper
Hacheur

(30) Priorität: 01.09.1989 DE 3929098
(43) Veröffentlichungstag der Anmeldung: 08.04.1992
(62) Teilanmeldung aus: 90116672.8
(73) Patentinhaber: BISO B.V., NL-4707 BX Roosendaal (NL)
(72) Erfinder: Scharf, Alois, W-4520 Melle 8 (DE)
(74) Vertreter: Zinnecker, Armin, Dipl.-Ing.

(56) Entgegenhaltungen:
- EP-A- 0 331 784
- DE-A- 3 823 116
- DE-C- 834 463
- DE-C- 862 383
- DE-C- 877 070
- FR-A- 1 141 447
- GB-A- 2 116 834
- US-A- 2 842 175

## Beschreibung

Die Erfindung betrifft einen Häcksler, insbesondere einen Anbauhäcksler für Mähdrescher, nach dem Oberbegriff des Anspruchs 1.

Ein derartiger Häcksler ist aus der DE-GM 88 10 123 bekannt. Er dient dazu, Halmgut, insbesondere Stroh oder ähnliches, zu häckseln.

Bei diesem Häckslern kann es vorkommen, daß ein Halm in der durch die Häckslerrotation erzeugten Luftströmung längs dieser gefördert wird. Halmrichtung und Strömungsrichtung stimmen also im wesentlichen überein. Der betreffende Halm wird dann nicht oder nicht vollständig gehäckselt.

Aus der FR-OS 11 41 447 ist ein Häcksler bekannt, bei dem in den Umlaufkreis der rotierenden Messer ein Bauteil hineinragt, in dem Zähne und dazwischen liegende Lücken vorhanden sind, die von den rotierenden Messern durchlaufen werden können. Da das Bauteil in den Messer-Umlaufkreis hineinragt, muß es genau gefertigt uns justiert werden, was mit einem gewissen Aufwand verbunden ist.

Aufgabe der Erfindung ist es, einen einfach aufgebauten Häcksler der eingangs angegebenen Art vorzuschlagen, bei dem die Häckselwirkung verbessert ist.

Erfindungsgemäß wird diese Aufgabe durch die im kennzeichnenden Teil des Anspruchs 1 angegebenen Merkmale gelöst. Die nach innen weisende Leiste ist in Trommel-Drehrichtung hinter den Gegenmessern vorgesehen. Diese Leiste bildet ein Hindernis für die Halme, so daß auch längs und parallel zur Strömungsrichtung geförderte Halme abgelenkt, erfaßt und gehäckselt werden. Die Messer sind auch an ihrer Stirnseite schneidenförmig gestaltet. Überraschend hat sich gezeigt, daß durch diese zusätzliche Schneide an der Stirnseite der Messer auch solche Halme erfaßt und gehäckselt werden, die parallel zur Strömungsrichtung gefördert werden, und daß weiterhin die Halme bereits beim Eindringen in den Messerkreis erfaßt und aufgerissen werden. Die Schneiden an den Messer-Stirnseiten wirken sich für den Häckselvorgang nochmals vorteilhaft aus.

Vorteilhafte Weiterbildungen sind in den Unteransprüchen beschrieben.

Vorzugsweise ist im Abstand von der ersten Leiste eine weitere Leiste vorgesehen. Die Leisten können aus einem Winkelprofil oder aus einem anderen Längsprofil, beispielsweise einem geraden Profil, bestehen. Vorzugsweise sind die Leisten zustellbar, also in Richtung auf die Trommel-Drehachse zu und von dieser weg verstellbar und feststellbar. Hierdurch kann der Abstand der Leisten und insbesondere deren der Trommel zugewandten Enden einjustiert und optimiert werden.

Nach einer vorteilhaften Weiterbildung enden die Leisten in einem geringen Abstand vom Messerkreis. Hierdurch wird gewährleistet, daß alle Halme und insbesondere auch dünne Halme erfaßt und gehäckselt werden.

Nach einer weiteren vorteilhaften Weiterbildung ragen die Leisten in den Messerkreis hinein und weisen sie bei den Rotationsebenen der Messer Ausnehmungen auf. Hierdurch wird eine besonders gute Ablenkungswirkung erzielt. Es wird gewährleistet, daß alle Halme in den Messerkreis hinein gefördert und dort erfaßt und gehäckselt werden. Die von der Leiste abgebremsten Halme werden durch das nachrutschende Häckselgut quergerichtet und von den Messern zuverlässig erfaßt. Damit trotzdem die Trommel rotieren kann, müssen an den Stellen, an denen die Rotationsebenen der Messer die Leisten schneiden, entsprechende Ausnehmungen für die Messer vorgesehen werden.

Die Messer können an der Stirnseite eine gerade Schneide aufweisen. Es ist allerdings auch möglich, daß die Messer an der Stirnseite eine runde Schneide aufweisen, wobei der Messerradius vorzugsweise gleich dem Trommelradius ist. Der Abstand der Außenkante des Messers von dem der Trommel zugewandten Ende der Leisten ist also beim Vorbeigang des Messers stets gleich groß.

An den Stirnseiten der Messer können halbmondförmige Ausnehmungen eingeschliffen sein.

Die Leiste bzw. die Leisten können verzahnt sein, um die Häckselwirkung weiter zu verbessern.

Vorzugsweise sind die Leiste bzw. die Leisten schwenkbar. Vorteilhaft ist es, wenn die Leisten in der jeweiligen Schwenklage feststellbar sind.

Die Leiste bzw. die Leisten können aus einem das Führungsblech durchsetzenden T-Profil bestehen. Die Leisten haben also die Form eines T-Profils, so daß durch die in den Schneidraum hineinragenden Leisten Stroh gerichtet und zerkleinert werden kann. Durch Umdrehen des T-Profils deckt der Flansch den Durchbruch im Führungsblech ab.

Vorteilhaft ist es, wenn das Führungsblech in Trommel-Drehrichtung hinter den Gegenmessern schwenkbar angeordnet ist. Das Führungsblech kann vorzugsweise in beliebigen Stellungen arretiert werden. Eine weitere vorteilhafte Weiterbildung ist dadurch gekennzeichnet, daß das Führungsblech in Trommel-Drehrichtung hinter den Gegenmessern und vor der Leiste radial nach innen verläuft, so daß das Häckselgut der Leiste und den Messern wieder zugeführt wird.

Ausführungsbeispiele der Erfindung werden nachstehend anhand der Zeichnungen im einzelnen erläutert. In diesen zeigt
- Fig.1: einen Häcksler in einer Seitenansicht,
- Fig.2: den in Fig.1 dargestellten Häcksler in einer Schnittansicht,
- Fig.3: ein zweites Ausführungsbeispiel eines Häckslers in einer Seitenansicht,
- Fig.4: den in Figur 3 dargestellten Häcksler in einer Schnittansicht,
- Fig.5: ein drittes Ausführungbeispiel eines Häckslers in einer Seitenansicht,
- Fig.6: den in Fig.5 dargestellten Häcksler in einer Schnittansicht,
- Fig.7: ein stirnseitig gerade geschliffenes Messer in einer Draufsicht,
- Fig.8: einen Schnitt durch das in Fig.7 dargestellte Messer,
- Fig.9: eine Einzelheit des in Fig.7 dargestellten Messers in einer vergrößerten Ansicht,
- Fig.10: einen Schnitt durch die Einzelheit der Fig.9,
- Die Figuren 11 - 23: beziehen sich auf Ausführungsbeispiele, die nicht unter die Ansprüche fallen.
- Fig.24: ein weiteres Ausführungsbeispiel in einer Seitenansicht,
- Fig.25: das in Fig. 24 dargestellte Ausführungsbeispiel in einer Schnittansicht,
- Fig.26: ein weiteres Ausführungsbeispiel in einer Seitenansicht,
- Fig.27: das in Fig. 26 dargestellte Ausführungsbeispiel in einer Schnittansicht,
- Fig.28: ein weiteres Ausführungsbeispiel in einer Seitenansicht,
- Fig.29: das in Fig. 28 dargestellte Ausführungsbeispiel in einer Schnittansicht,
- Fig.30: ein weiteres Ausführungsbeispiel in einer Seitenansicht,
- Fig.31: das in Fig. 30 dargestellte Ausführungsbeispiel in einer Schnittansicht,
- Fig.32: ein weiteres Ausführungsbeispiel in einer Seitenansicht,
- Fig.33: das in Fig. 32 dargestellte Ausführungsbeispiel in einer Schnittansicht,
- Fig.34: ein weiteres Ausführungsbeispiel in einer Seitenansicht und
- Fig.35: das in Fig. 34 dargestellte Ausführungsbeispiel in einer Schnittansicht.

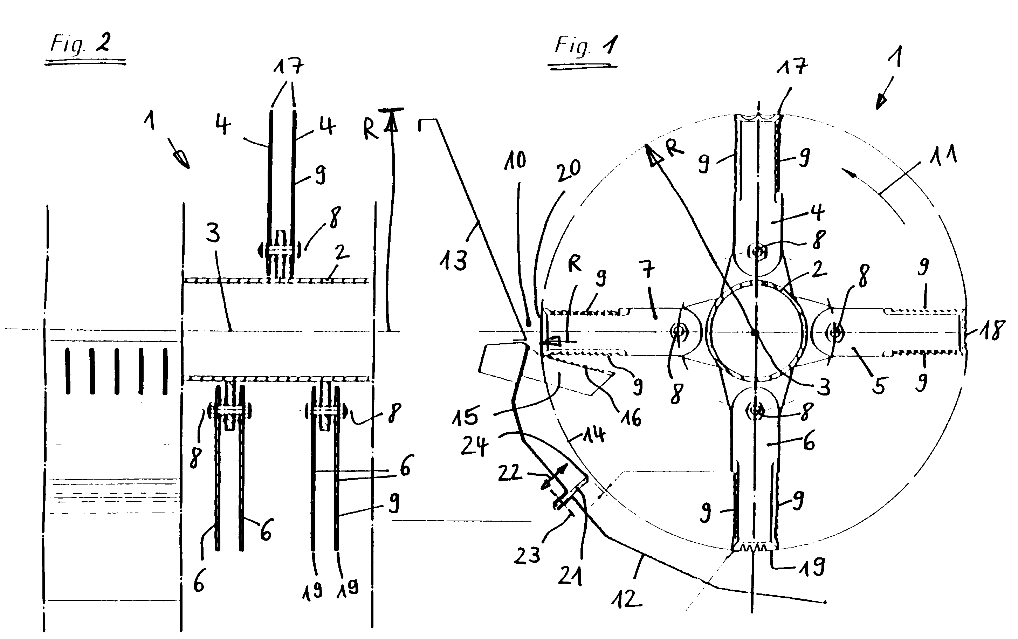

Der in den Figuren 1 und 2 gezeigte Häcksler besitzt eine Trommel 1 mit einer Messerwelle 2, die um eine im wesentlichen horizontale Achse 3 rotiert. Am Umfang der Messerwelle 2 ist eine Vielzahl von Messern 4,5,6,7 schwenkbar angeordnet. Die Messer-Schwenkachsen 8 verlaufen parallel zur Trommel-Drehachse 3. Die Messer weisen an ihren Längsseiten 9 Schneiden auf. Die Herstellung der Schneiden erfolgt durch Schleifen; es sind aber auch andere Herstellungsweisen möglich. Der Häcksler 1 besitzt weiter eine Einzugsöffnung 10 und ein in Trommel-Drehrichtung 11 daran anschließendes Führungsblech 12. Das Stroh wird in die Einzugsöffnung 10 durch ein Zuführblech 13 eingeführt. Die Einzugsöffnung 10 wird also vom Ende dieses Zuführblechs 13 gebildet. Das Führungsblech 12 verläuft im wesentlichen parallel und im Abstand vom Messer-Umlaufkreis 14. In Trommel-Drehrichtung 11 sind hinter der Einzugsöffnung 10 feststehende Gegenmesser 15 angeordnet. Die Gegenmesser 15 sind an dem Führungsblech 12 befestigt. Sie ragen in den Messerkreis 14 hinein und sind an ihrer Oberseite, also in der der Trommel-Drehrichtung 11 zugewandten Seite mit Zähnen 16 versehen. Das Führungsblech 12 erstreckt sich über einen Winkel von etwa 90 Grad um die Trommel-Drehachse 3.

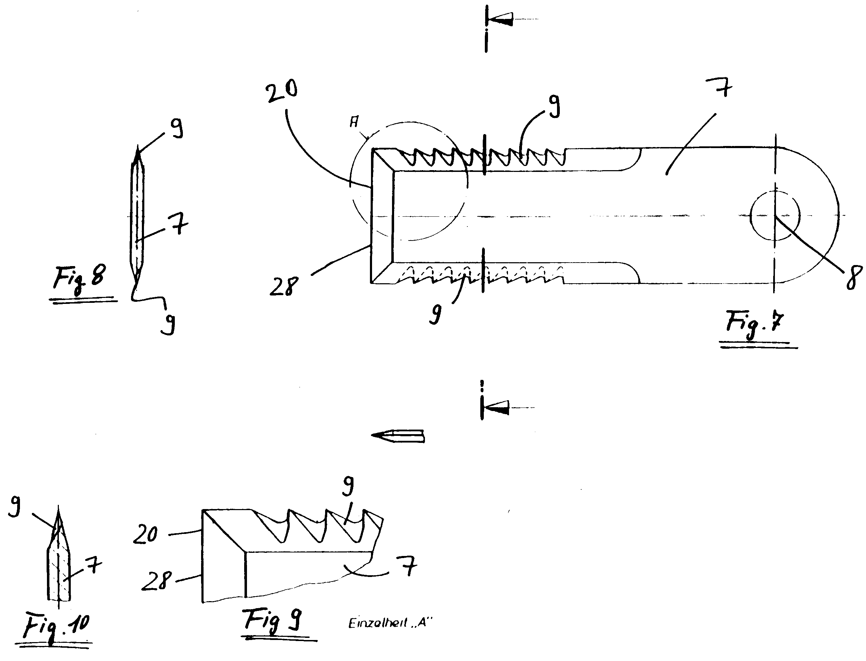

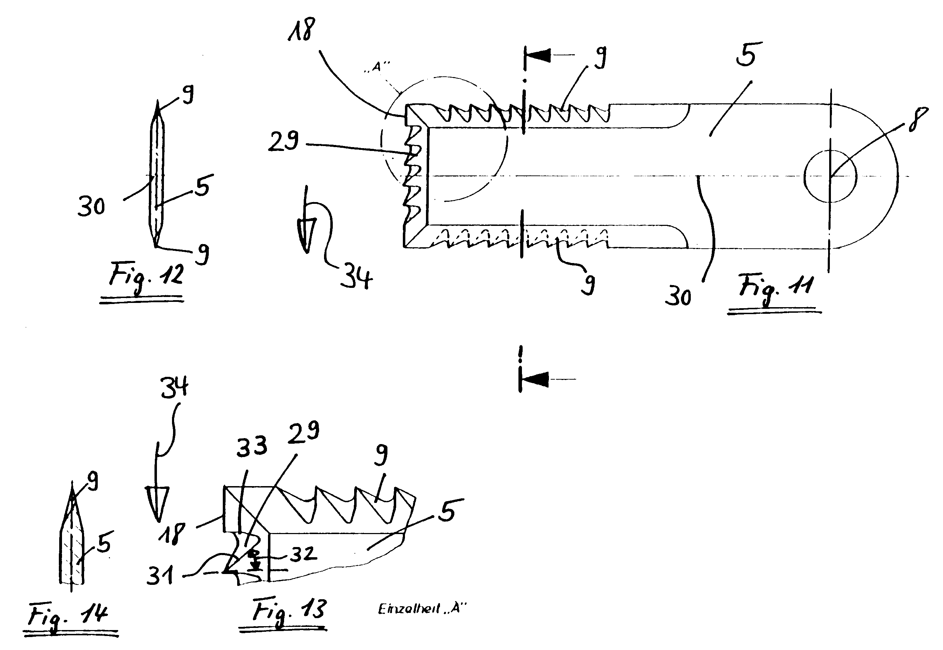

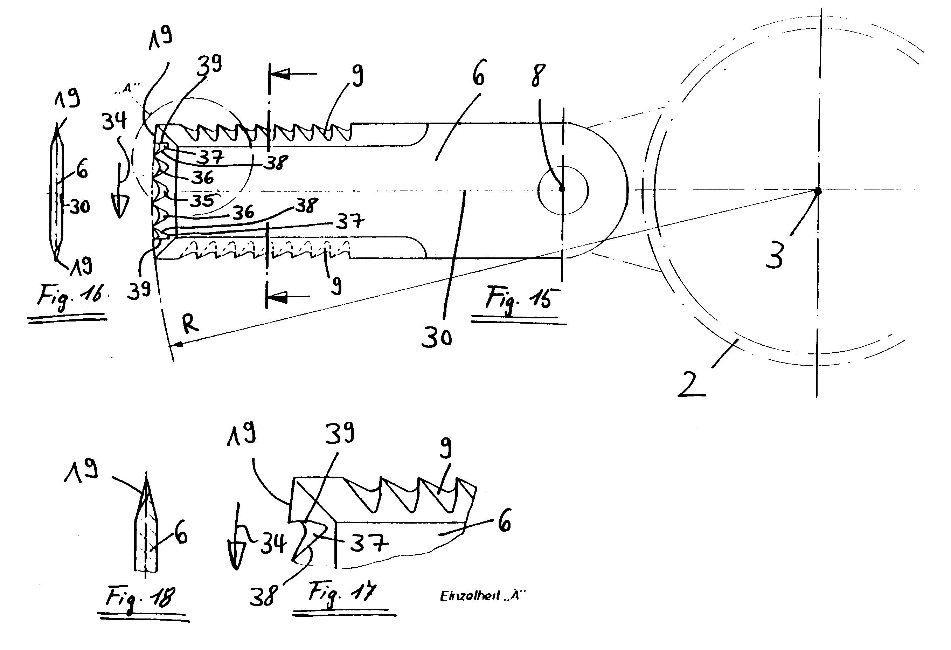

Die Messer 4,5,6,7 sind auch an ihrer jeweiligen Stirnseite 17,18,19,20 schneidenförmig gestaltet. Die Gestaltung der Schneiden erfolgt durch Schleifen; es sind aber auch andere Herstellungsweisen möglich. In der Fig.1 sind vier verschiedene Messer 4,5,6,7 gezeigt. In der praktischen Ausführung werden allerdings immer dieselben Messer für einen Häcksler verwendet; lediglich aus Gründen der zeichnerischen Darstellung sind also vier verschiedene Messer in der Figur 1 gezeigt. Bei dem Messer 4 sind an der Stirnseite 17 halbmondförmige Ausnehmungen eingeschliffen (vgl. Figuren 19-23). Das Messer 5 ist an seiner Stirnseite 18 gezahnt, wobei die Zähne unsymmetrisch ausgestaltet sind (vgl. Figuren 11-14). Auch das Messer 6 ist an seiner Stirnseite 19 gezahnt (vgl. Figuren 15-18). Das Messer 7 weist an seiner Stirnseite 20 eine glatte Schneide auf (vgl. Figuren 7-10). Das Messer 6 weist an seiner Stirnseite eine runde Schneide auf, die anderen Messer 4,5 und 7 weisen an der Stirnseite eine gerade Schneide auf. Der Radius R der runden Schneide ist derselbe wie der Messertrommel-Radius R.

An dem Führungsblech 12 ist in Trommel-Drehrichtung 11 hinter den Gegenmessern 15 eine nach innen weisende Leiste 21 vorgesehen. Die Leiste 21 besteht aus einem Längsprofil bzw. geraden Profil. Sie ist zustellbar, also in Richtung des Doppelpfeils 22 zur Trommel-Drehachse 3 hin und von dieser weg verstellbar und feststellbar, beispielsweise durch eine Langloch-Schraubenverbindung 23. Die Leiste 21 bzw. deren der Messertrommel 1 zugewandtes Ende 24 endet in einem geringen Abstand vom Messerkreis 14, der in dem Ausführungsbeispiel der Fig.1 1mm bis 10 mm beträgt. Das Ende 24 der Leiste 21 ist schräg angeschliffen, und zwar derart, daß der geringste Abstand zwischen dem Ende 24 der Leiste 21 und dem Messerkreis 14 auf der der Trommel-Drehrichtung 11 zugewandten Seite der Leiste 21 liegt.

Durch die Rotation der Messer wird eine Luftströmung erzeugt, die im wesentlichen der Rotationsrichtung 11 der Trommel 1 entspricht. Wenn ein Halm längs und parallel zu dieser Strömungsrichtung gefördert wird, wird er durch den stirnseitigen Anschliff der Messer zuverlässig erfaßt und gehäckselt. Diese Häckselwirkung wird ganz erheblich verbessert und verstärkt durch die Leiste 21.

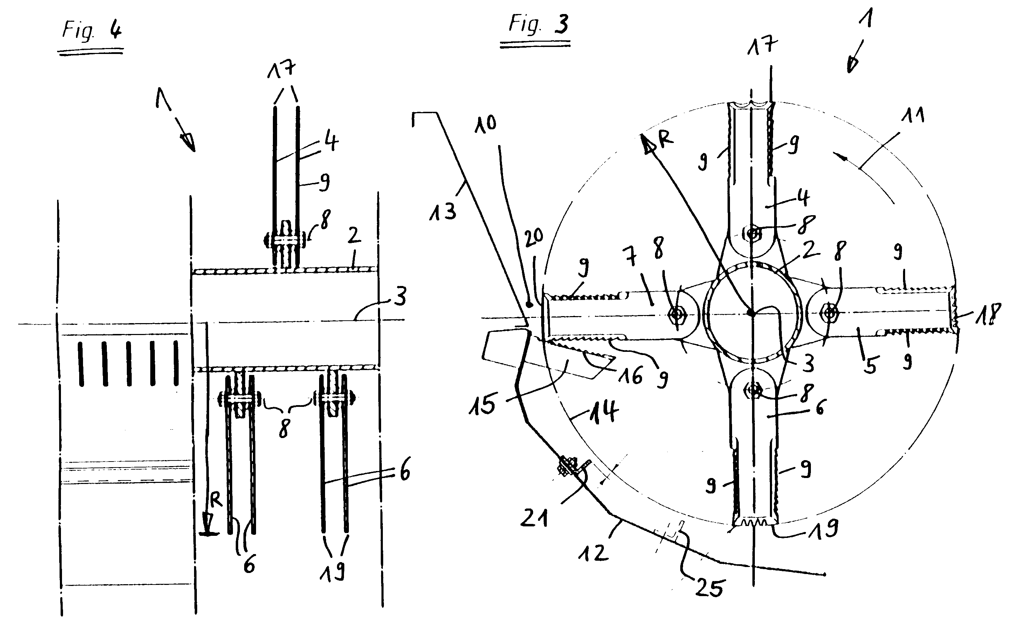

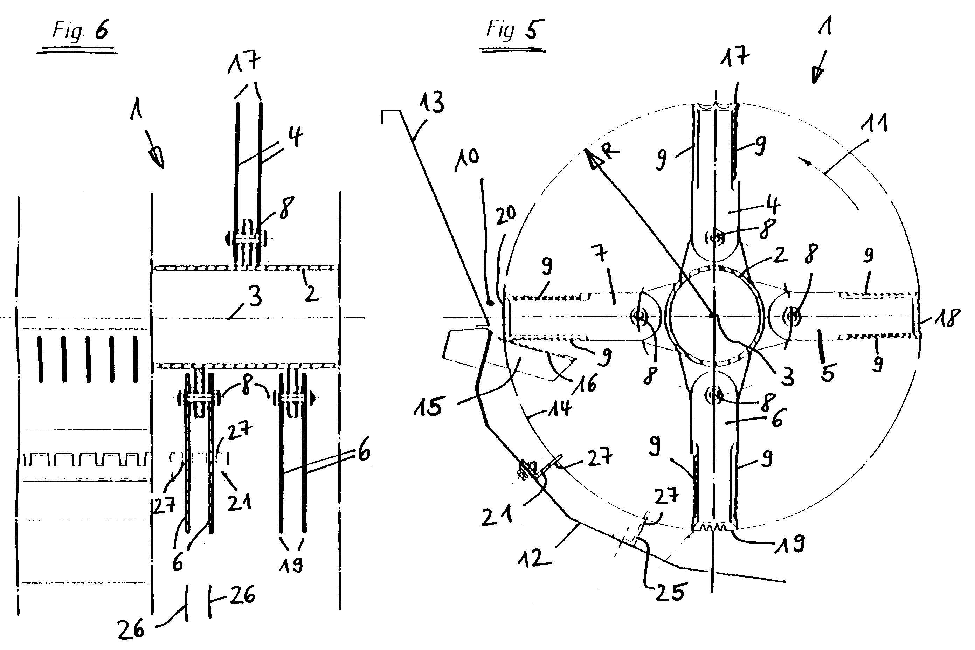

Die Figuren 3 und 4 zeigen ein weiteres Ausführungsbeispiel, bei dem gleiche Teile mit gleichen Bezugszeichen versehen sind. Im Unterschied zur Ausführungsform der Figuren 1 und 2 besteht die Leiste 21 aus einem Winkelprofil. Im Abstand von der ersten Leiste 21 ist in Trommel-Drehrichtung 11 eine zweite Leiste 25 vorgesehen, die ebenfalls als Winkelprofil ausgebildet ist und die die Häckselwirkung noch zusätzlich verbessert.

Die Figuren 5 und 6 zeigen eine weitere Ausführungsform, bei der die Leisten 21,25 in den Meserkreis 14 hineinragen. Bei den Rotationsebenen 26 der Messer sind entsprechende Ausnehmungen 27 in den Leisten 21,25 vorgesehen.

Die Figuren 7 bis 10 zeigen ein Messer 7, das an seiner Stirnseite 20 eine gerade Schneide aufweist. Die Vorderkante 28 des Messers verläuft also in einer geraden Linie.

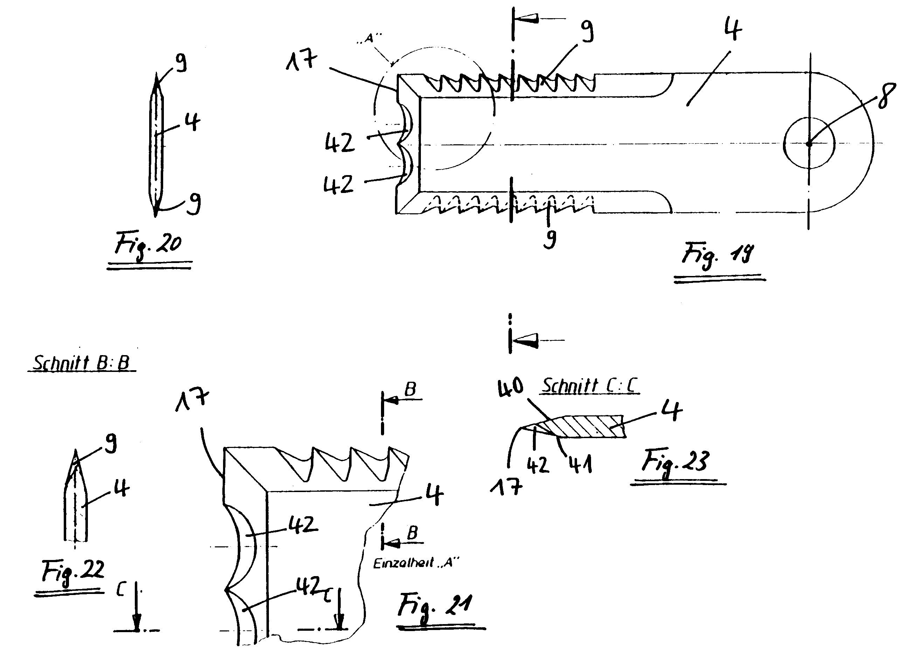

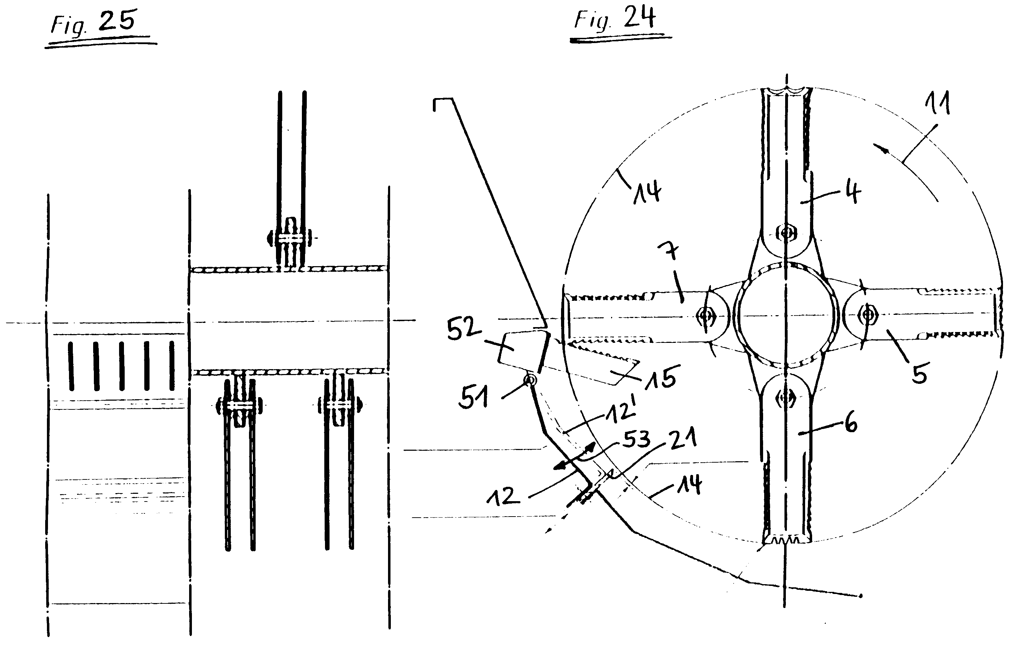

Bei dem in den Fig. 24 und 25 gezeigten Ausführungsbeispiel ist das Führungsblech 12 in Trommel-Drehrichtung 11 hinter den Gegenmessern 15 schwenkbar angeordnet. Der Schwenkpunkt 51 befindet sich unmittelbar hinter bzw. unter dem die Gegenmesser 15 haltenden Messerkasten 52. Die Schwenkbarkeit des Führungsblechs 12 ist durch den Doppelpfeil 53 angedeutet. Die eingeschwenkte Lage des Führungsblechs 12 ist gestrichelt 12' dargestellt. In der eingeschwenkten Stellung 12' verläuft das Führungsblech 12 in Trommel-Drehrichtung 11 hinter den Gegenmessern 15 und vor der Leiste 21 radial nach innen, so daß das Häckselgut der Leiste 21 und den Messern 4-7 wieder zugeführt wird. Das Führungsblech 12 ist in Drehrichtung 11 hinter dem Gegenmesserkasten 52 im Drehpunkt 51 schwenkbar angeordnet und in beliebigen Stellungen arretierbar, wodurch der Abstand der Leisten 21 zur Rotationsbahn 14 der Messer 4-7 verstellt werden kann. Das Führungsblech 12 ist demnach hinter dem Gegenmesserkasten 52 so ausgebildet, daß das Häckselgut der Leiste 21 und den Messern 4-7 wieder zugeführt wird, um noch weiter zerkleinert zu werden.

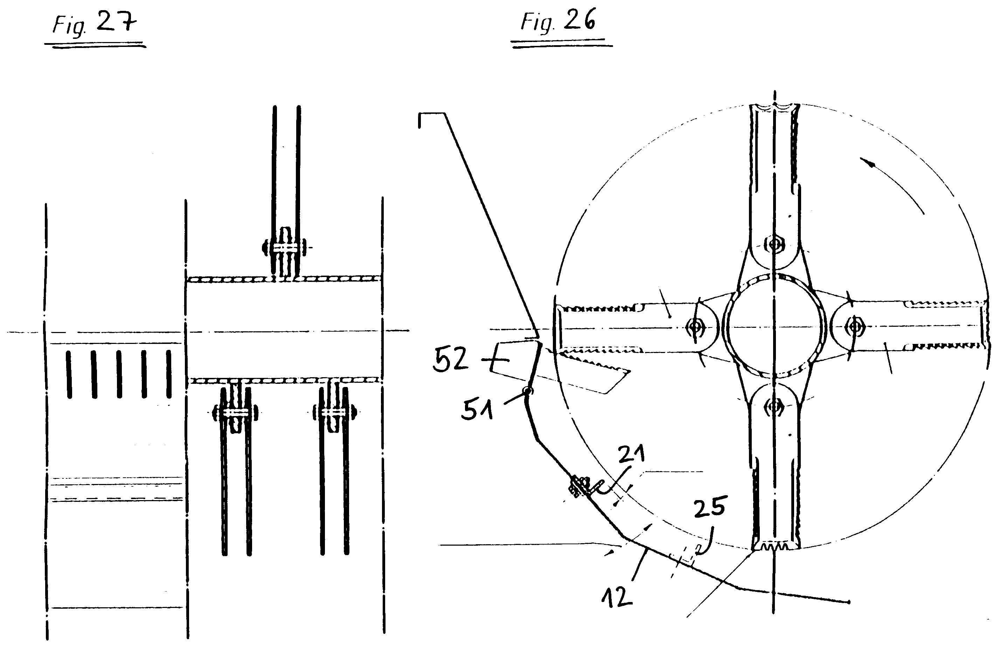

Die Fig. 26 und 27 zeigen ein Ausführungsbeispiel, bei dem auf dem Führungsblech 12 zwei Leisten 21, 25 im Abstand voneinander angeordnet sind und bei dem das Führungsblech 12 um einen unmittelbar hinter dem Messerkasten 52 liegenden Schwenkpunkt 51 verschwenkt werden kann.

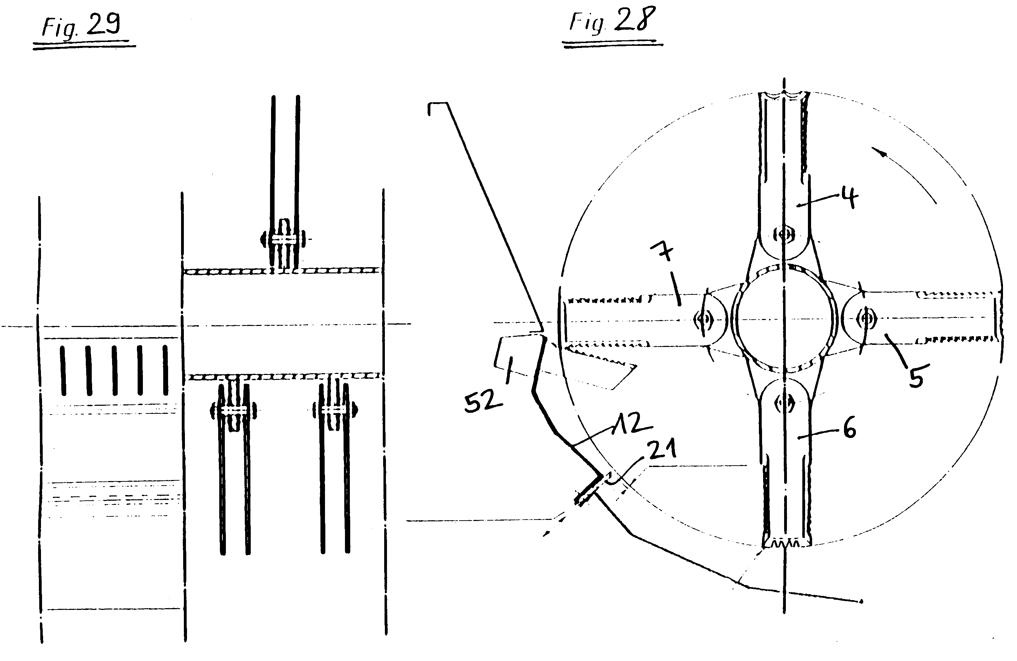

Bei dem in den Fig. 28 und 29 gezeigten Ausführungsbeispiel ist das Führungsblech 12 hinter dem Gegenmesserkasten 52 so ausgebildet, daß das Häckselgut der Leiste 21 und den Messern 4,5,6,7 zum Zwecke der weiteren Zerkleinerung wieder zugeführt wird.

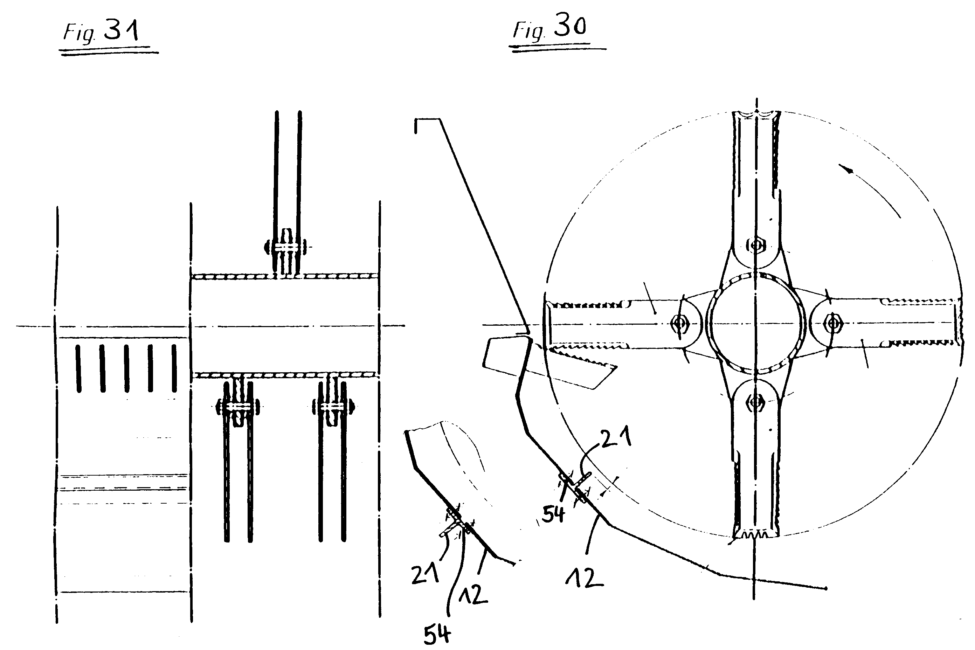

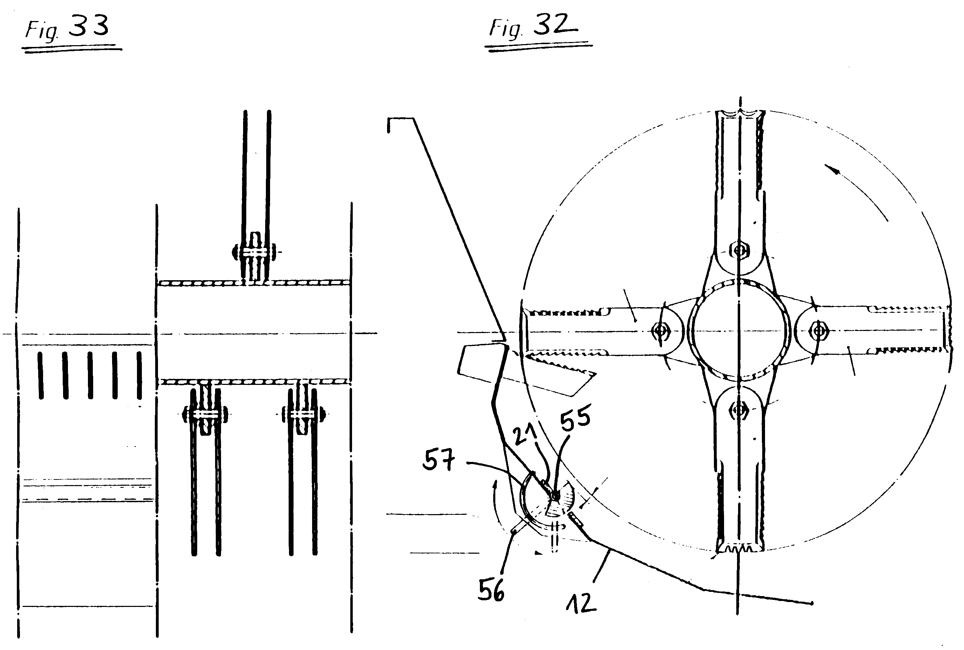

Die Fig. 30 und 31 zeigen ein Ausführungsbeispiel, bei dem die Leiste 21 aus einem das Führungsblech 12 durchsetzenden T-Profil besteht. Durch die in den Schneidraum hineinragende Leiste 21 kann Stroh gerichtet und zerkleinert werden. Durch Umdrehen des T-Profiles deckt der Flansch 54 dieses T-Profils den Durchbruch in dem Führungsblech ab.

In den Fig. 32 und 33 ist ein Ausführungsbeispiel gezeigt, bei dem die Leiste 21 schwenkbar ist. Die Schwenkachse 55 liegt auf dem Führungsblech 12. Die Verschwenkung erfolgt durch einen mit der Leiste 21 verbundenen Hebel 56, der in einem kreisförmigen Langloch 57 geführt wird und arretierbar ist. Hierdurch kann die Leiste 51 über einen weiten Winkelbereich verstellt werden.

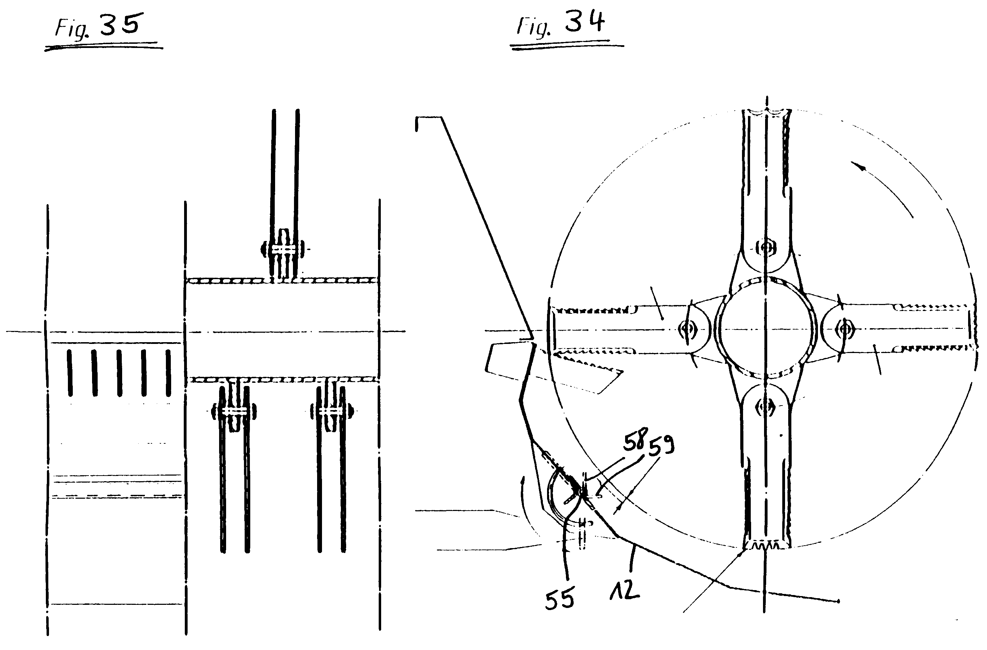

In den Fig. 34 und 35 ist ein Ausführungsbeispiel dargestellt, bei dem die Leiste 21 ebenfalls um einen auf dem Führungsblech 12 liegenden Schwenkpunkt 55 verschwenkbar und arretierbar ist. Die Leiste 21 besteht aus einem Winkelprofil mit zwei rechtwinklig zueinander verlaufenden Schenkeln 58, 59.

## Patentansprüche

1. Häcksler, insbesondere Anbauhäcksler für Mähdrescher,
mit einer Trommel (1) bestehend aus einer um eine im wesentlichen horizontale Achse (3) rotierenden Messerwelle (2), an deren Umfang eine Vielzahl von Messern (4,5,6,7) schwenkbar (8) angeordnet ist, die an ihrer Längsseite (9) eine Schneide aufweisen,
mit einer Einzugsöffnung (10) und einem in Trommel-Drehrichtung (11) daran anschließenden, im wesentlichen parallel und im Abstand vom Messer-Umlaufkreis (14) angeordneten Führungsblech (12),
mit in Trommel-Drehrichtung (11) hinter der Einzugsöffnung (10) angeordneten, feststehenden Gegenmessern (15)
und mindestens einer an dem Führungsblech (12) vorgesehenen, nach innen weisenden, parallel zur Trommel-Drehachse (3) verlaufenden Leiste (21),
**dadurch gekennzeichnet**,
daß die Messer (4, 5, 6, 7) auch an ihrer Stirnseite (17, 18, 19, 20) schneidenförmig gestaltet sind
und daß die Leiste (21) in Trommel-Drehrichtung (11) hinter den Gegenmessern (15) vorgesehen ist.

2. Häcksler nach Anspruch 1, dadurch gekennzeichnet, daß im Abstand von der ersten Leiste (21) eine weitere Leiste (25) vorgesehen ist.

3. Häcksler nach einem der vorhergehenden Ansprüche, dadurch gekennzeichnet, daß die Leisten (21,25) aus einem Winkelprofil oder aus einem Längsprofil bestehen.

4. Häcksler nach einem der vorhergehenden Ansprüche, dadurch gekennzeichnet, daß die Leisten zustellbar (22,23) sind.

5. Häcksler nach einem der vorhergehenden Ansprüche, dadurch gekennzeichnet, daß die Leisten (21, 25) in einem geringen Abstand vom Messerkreis (14) enden.

6. Häcksler nach einem der vorhergehenden Ansprüche, dadurch gekennzeichnet, daß die Leisten (21, 25) in den Messerkreis (14) hineinragen und bei den Rotationsebenen (26) der Messer (6) Ausnehmungen (27) aufweisen.

7. Häcksler nach einem der vorhergehenden Ansprüche, dadurch gekennzeichnet, daß die Messer (7, 5) an der Stirnseite (20, 18) eine gerade Schneide aufweisen.

8. Häcksler nach einem der vorhergehenden Ansprüche, dadurch gekennzeichnet, daß die Messer (6) an der Stirnseite (19) eine runde Schneide aufweisen.

9. Häcksler nach Anspruch 8, dadurch gekennzeichnet, daß der Messerradius (R) gleich dem Trommel-Radius (R) ist.

10. Häcksler nach einem der vorhergehenden Ansprüche, dadurch gekennzeichnet, daß die Leiste (21) bzw. Leisten (21, 25) verzahnt sind.

11. Häcksler nach einem der vorhergehenden Ansprüche, dadurch gekennzeichnet, daß die Leiste (21) bzw. die Leisten (21, 25) schwenkbar sind.

12. Häcksler nach einem der vorhergehenden Ansprüche, dadurch gekennzeichnet, daß die Leiste (21) bzw. die Leisten (21, 25) aus einem das Führungsblech (12) durchsetzenden T-Profil bestehen.

13. Häcksler nach einem der vorhergehenden Ansprüche, dadurch gekennzeichnet, daß das Führungsblech (12) in Trommel-Drehrichtung (11) hinter den Gegenmessern (15) schwenkbar (51) angeordnet ist.

14. Häcksler nach einem der vorhergehenden Ansprüche, dadurch gekennzeichnet, daß das Führungsblech (12) in Trommel-Drehrichtung (11) hinter den Gegenmessern (15) und vor der Leiste (21) radial nach innen verläuft, so daß das Häckselgut der Leiste (21) und den Messern (4, 5, 6, 7) wieder zugeführt wird.

## Claims

1. Chopper, in particular a mounted chopper for combine harvesters,
with a drum (1) comprising a knife shaft (2) which rotates about an essentially horizontal axis (3), and pivot-mounted (8) on the circumference of which are a multiplicity of knives (4, 5, 6, 7) which have a cutting edge on their longitudinal side (9);
with an entry opening (10) and a guide plate (12) which adjoins the latter in the direction of rotation (11) of the drum and is arranged essentially parallel to, and at a distance from, the circle of rotation (14) of the knives;
with fixed counterknives (15) which are arranged behind the entry opening (10) in the direction of rotation (11) of the drum;
and at least one strip (21), which is provided on the guide plate (12), points inwards and extends parallel to the axis of rotation (3) of the drum;
characterized
in that the knives (4, 5, 6, 7) are also provided with a cutting edge on their end (17, 18, 19, 20);
and in that the strip (21) is provided behind the counterknives (15) in the direction of rotation (11) of the drum.

2. Chopper according to Claim 1, characterized in that another strip (25) is provided at a distance from the first strip (21).

3. Chopper according to one of the preceding claims, characterized in that the strips (21, 25) comprise an angle section or longitudinal section.

4. Chopper according to one of the preceding claims, characterized in that the strips can be advanced (22, 23).

5. Chopper according to one of the preceding claims, characterized in that the strips (21, 25) end at a short distance from the knife circle (14).

6. Chopper according to one of the preceding claims, characterized in that the strips (21, 25) project into the knife circle (14) and have recesses (27) in the planes of rotation (26) of the knives (6).

7. Chopper according to one of the preceding claims, characterized in that the knives (7, 5) have a straight cutting edge at the end (20, 18).

8. Chopper according to one of the preceding claims, characterized in that the knives (6) have a rounded cutting edge at the end (19).

9. Chopper according to Claim 8, characterized in that the knife radius (R) is equal to the drum radius (R).

10. Chopper according to one of the preceding claims, characterized in that the strip (21) or strips (21, 25) are serrated.

11. Chopper according to one of the preceding claims, characterized in that the strip (21) or strips (21, 25) are pivotable.

12. Chopper according to one of the preceding claims, characterized in that the strip (21) or strips (21, 25) comprise a T section which passes through the guide plate (12).

13. Chopper according to one of the preceding claims, characterized in that the guide plate (12) is pivot-mounted (51) behind the counterknives (15) in the direction of rotation (11) of the drum.

14. Chopper according to one of the preceding claims, characterized in that the guide plate (12) extends radially inwards behind the counterknives (15) and in front of the strip (21) in the direction of rotation (11) of the drum, with the result that the chopped material is fed back to the strip (21) and the knives (4, 5, 6, 7).

## Revendications

1. Hacheur, notamment hacheur porté pour des moissonneuses-batteuses, avec un tambour (1) constitué d'un arbre à couteaux (2) tournant autour d'un axe essentiellement horizontal (3), au pourtour duquel est disposée de façon pivotante (8) une multitude de couteaux (4, 5, 6, 7) qui présentent à leur côté longitudinal (9) un tranchant,
avec une ouverture d'entrée (10) et une tôle de guidage (12) faisant suite à celle-ci dans la direction de rotation du tambour (11), disposée sensiblement parallèlement à et à une certaine distance du cercle de rotation de couteaux (14),
avec des contre-couteaux fixes (15) disposés dans la direction de rotation du tambour (11) derrière l'ouverture d'entrée (10),
et au moins une baguette (21) prévue à la tôle de guidage (12), orientée vers l'intérieur, s'étendant parallèlement à l'axe de rotation (3) du tambour,
caractérisé en ce que les couteaux (4, 5, 6, 7) sont réalisés avec un tranchant également à leur côté frontal (17, 18, 19, 20), et
en ce que la baguette (21) est prévue dans la direction de rotation (11) du tambour derrière les contre-couteaux (15).

2. Hachoir selon la revendication 1, caractérisé en ce qu'il est prévu à une certaine distance de la première baguette (21) une baguette additionnelle (25).

3. Hachoir selon l'une des revendications précédentes, caractérisé en ce que les baguettes (21, 25) sont constituées d'une cornière ou d'un profil longitudinal.

4. Hachoir selon l'une des revendications précédentes, caractérisé en ce que les baguettes (22, 23) sont rapprochables.

5. Hachoir selon l'une des revendications précédentes, caractérisé en ce que les baguettes (21, 25) se terminent à une petite distance du cercle de couteaux (14).

6. Hachoir selon l'une des revendications précédentes, caractérisé en ce que les baguettes (21, 25) font saillie dans le cercle de couteaux (14) et présentent dans les plans de rotation (26) des couteaux (6) des évidements (27).

7. Hachoir selon l'une des revendications précédentes, caractérisé en ce que les couteaux (7, 5) présentent aux côtés frontaux (20, 18) un tranchant rectiligne.

8. Hachoir selon l'une des revendications précédentes, caractérisé en ce que les couteaux (6) présentent au côté frontal (19) un tranchant rond.

9. Hachoir selon la revendication 8, caractérisé en ce que le rayon de couteau (R) est égal au rayon de tambour (R).

10. Hachoir selon l'une des revendications précédentes, caractérisé en ce que la baguette (21) ou les baguettes (21, 25) sont dentées.

11. Hachoir selon l'une des revendications précédentes, caractérisé en ce que la baguette (21) ou les baguettes (21, 25) sont pivotantes.

12. Hachoir selon l'une des revendications précédentes, caractérisé en ce que la baguette (21) ou les baguettes (21, 25) sont constituées d'un profil en T traversant la tôle de guidage (12).

13. Hachoir selon l'une des revendications précédentes, caractérisé en ce que la tôle de guidage (12) est disposée de façon pivotante (51) dans la direction de rotation (11) du tambour derrière les contre-couteaux (15).

14. Hachoir selon l'une des revendications précédentes, caractérisé en ce que la tôle de guidage (12) s'étend dans la direction de rotation du tambour (11) derrière les contre-couteaux (15) et devant la baguette (21) radialement vers l'intérieur de façon que les produits hachés soient ramenés de nouveau à la baguette (21) et aux couteaux (4, 5, 6, 7).
